# EUROPEAN PATENT SPECIFICATION

(11) **EP 1 768 281 B1**
(45) Date of publication and mention of the grant of the patent: **20.07.2016**
(21) Application number: 04738262.7
(22) Date of filing: 22.06.2004
(51) Int. Cl.: H04B 10/00, H04J 14/02

(54) **A METHOD FOR SERVICE CONNECTION SETUP AND SERVICE RESUME PROTECTION IN OPTICAL NETWORK**
VERFAHREN FÜR DIENSTVERBINDUNGSAUFBAU UND DIENSTWIEDERAUFNAHMESCHUTZ IN EINEM OPTISCHEN NETZWERK
PROCEDE PERMETTANT D'ETABLIR UNE CONNEXION DE SERVICE ET PROTECTION DE REPRISE DE SERVICE DANS UN RESEAU OPTIQUE

(43) Date of publication of application: 28.03.2007
(73) Proprietor: ZTE Corporation, Shenzhen, Guangdong 518057 (CN)
(72) Inventor: YANG, Faming; ZTE Plaza, Keji Road South,, Shenzhen, Guangdong 518057 (CN)
(74) Representative: Nony
(86) International application number: PCT/CN2004/000664
(87) International publication number: WO 2005/125056

(56) References cited:
- WO-A2-02/09349
- US-A- 5 748 611
- US-A1- 2002 030 864
- US-B1- 6 430 150
- US-B1- 6 430 150
- MAIER G ET AL: "Optical network survivability: protection techniques in the WDM layer", PHOTONIC NETWORK COMMUNICATIONS, KLUWER ACADEMIC PUBLISHERS, DORDRECHT, NL, vol. 4, no. 3-4, 1 July 2002 (2002-07-01), pages 251-269, XP007917157, ISSN: 1387-974X

## Description

### FIELD OF THE INVENTION

The present invention relates to a field of optical network, in particularly to a method for setting up service connection and for restoration and protection of service in a reconfigurable optical network constituted of SDH/SONET or WDM network elements.

### BACKGROUND OF THE INVENTON

In earlier prior arts of restoration upon service failures in an optical network, it is common to use protection techniques such as the multiplexing section protection and end-to-end path protection mechanism. In this type of protection technique, protection paths for protecting service must be allocated in simultaneity when allocating the working path resources in the optical network, since there exists a severe waste of network bandwidth resources, which is inefficient to protect the service without taking the dynamic bandwidth request based on the service into account for protection and restoration of the service.

To overcome the weakness of the conventional protection technique for restoring service failures, the dynamic protection technique comes to be applied in the optical network, that is to protect a service by setting up a working connection and a protection connection supporting a service connection upon on reception of a service request, and to restore service by applying a pre-assigned route or a dynamic route in the events that the original service connection faults to affect the service. In order to increase the efficiency of the service restoration, using a distributed control mechanism instead of the conventional central control mechanism is taken into account, and further setting up a pre-assigned route at the same time when setting up a working connection to enable establishing an alternate connection for restoration the service faults speedily is also considered. Furthermore, when utilizing the distributed control technique, resource reservation is used in the pre-assigned route, that is all nodes traversed by the pre-assigned route are configured with reserved path resources, so that an alternate connection can be speedily established by allocating the reserved path resource and setting up cross-connection of respective nodes.

US patent No. US5748611 discloses a path based restoration method for a distributed stepwise route, the processing of the method are mainly as follows:
(a) The source node broadcasts a PACK message including source node, destination node and path ID.
(b) When a tandem node receives a first copy of a PACK message, it increases the number of hops (that is the number of spans) in the message and rebroadcasts the message along every span but the one on which it was received. When a tandem node receives a second copy of a PACK message, it sends it only along the span on which the first copy was received. Third and forth copies of a PACK message are not rebroadcast.
(c) When the destination node receives a PACK message along a span, it replies with an ACK message in order to conservatively reserve bandwidth on that span for a restoration path.
(d) When a tandem node receives an ACK message, it forwards a message along the restoration path indicated by the ACK message to reserve bandwidth.
(e) When the source node receives an ACK message, it sends out a CONF message along the restoration path; as each tandem node forwards the CONF message, it connects spare links in accordance with the message in order to form the restoration path. When the CONF message reaches the destination node, the restoration path has been created, then the disrupted communication can be restored.

The method in this patent selectively broadcasts the restoration messages to reduce the message traffic, and thanks to the conservative bandwidth reservation, the restoration of disrupted path only needs reservation of requesting resource, therefore the real use ratio of the resources is increased. Because the restoration is only allowed on those segments with available bandwidth, the speed of selection of the segments is raised, however, this technique does not support the source route mode at present.

In US patent US 6430150, a mesh network service restoration technique is provided. This patent is characterized by a first feature that each network element is stored therein with physical and logical topology information relating to the entirety of the network in advance. When the network element detects a fault, it dynamically computes an alternate route, then sends a command to perform time slot cross-connections. It is further characterized by a second feature that the network element is stored with physical and logical topology information relating to the entirety of the network in advance, and also computed and stored in advance with alternate routes for respective path faults. Once the network element detects a fault, time slot cross-connections are established directly according to the alternate route stored in the network element.

This patent is mainly characterized that each network element is stored with a table relating to resource allocating of the entirety of the network, namely the time slot resources which have been used and time slot resources which are spare, which is called as "physical topology table" in this patent, as shown in Fig.1A and Fig.1B.

Meanwhile, each network element is further stored with the link path and capacity for the configured service, which is called as "logical topology table" in this patent, as shown in Fig. 2A and Fig.2B.

In the event of fault, a network element adjacent to the location of the fault detects a L-AIS (line alarm indication signal) or receive an FERF (far end received failure) signal, and broadcasts the fault information through out the entire network. The network element on reception of the alarm message executes route computation for finding an alternate path by using the information stored locally and using a well-known routing algorithm, e.g. Dijkstra's algorithm, an algorithm of searching for the shortest route. It is believed that a consistent computation result (alternate paths) can be obtained for each network element by using this routing algorithm according to this patent, however, in reality the consistent computation result is not always ensured through this approach, i.e. the feasibility and reliability of this method still have some problems.

A path based protection technique is provided according to the Europe patent No. EP1303934, which is aiming to solve the problem of the configuration complexity of the multiplexing section protection and the problem of time consuming of the route based restoration. Accordingly, each working connection is configured with a route table for storing protection connections for corresponding working connection, is specially useful in the MESH network for protection, and characterized by its fast restoration.

The motivation of this patent is to provide a path protection technique to solve the problems caused by the complexity of BLSR's configuration and the problems regarding the performance of the restoration of the route based technique. Although this technique is more efficient than the formers, it has to use the route table and request path overheads, and the route table should be updated continuously, so that the operation is complex, especially for networks of 10G or even higher speed.

The US patent US 20020097671 relates to a method of selecting a restoration route in the MESH telecommunication network, which advantageously pre-computes a restoration path of a link according to the link capacity at the beginning of setting up the service connection. The steps of choosing restoration path comprise: searching links physically diverse from the service path; weights are computed for these links according to their capacities; an appropriate restoration path is selected based on the weights for service restoration. The key feature of this patent is the route based restoration method, however it can not guarantee the restoration time of the service.

The US patent No. US 20020030864 embodying the latest restoration technique relates generally to a method for control and management of connections in a reconfigurable optical network and for service restoration in the event of a failure. The method according to this patent mainly comprises a step of establishing a current working connection and a pre-assigned route in a distributed manner upon reception of a request with the need of restoration when failure occurs, and reserving channel capacity resources for all the nodes traversed by said pre-assigned route. In the event of working connection fault, the nodes traversed by the pre-assigned route allocate channels and establish lightpath cross-connection, so as to realize fast restoration. It is noted that, when the pre-assigned route is determined, the reserved resource is allowed to be shared by all the pre-assigned routes of different Shared Risk Link Groups, and protocols such as OSPF for dynamically updating link capacity information including available capacity and reservation capacity etc. are required. However, there are still some other disadvantages in this patent as follows besides aforementioned shortcomings:
(1) The optimization of working connection may not be guaranteed, because the computation of pre-assigned route(i.e. alternate route) and resource reservation for the alternate route are not engaged after the creating of working connection is finished.
(2) It may not effectively monitor failure occurrence of the pre-assigned route, if there are only path resource reservation but no allocation of link connection, especially when a signal terminal of a transmission apparatus is equipped with a multi-mode adaptive function, this is because a service connection is composed of a subnet connection and a link connection, if the link connection does not physically exist, the link connection can not be monitored effectively.
(3) In setting up the reserved connection, the source nodes do not notify all the nodes traversed by the virtual connection the information of the Share Risk Link Group of the working connection corresponding to the reserved connection, so that it is impossible to enable the nodes traversed by this connection to consider the reservation of path resources for the different Share Risk Link Groups, that is the reserved resources can not be shared effectively by those nodes.

MAIER G and aL: "Optical network survivability: protection techniques in the WDM layer", PHOTONIC NETWORK COMMUNICATIONS, KLUWER ACADEMIC PUBLISHERS, DORDRECHT, NL, vol.4, no.3-4, 1 July 2002(2002-07-01), pages 251-269, XP007917157, ISSN:1387-974X) discloses survivability of WDM network. MAIER G and al. gives a general overview of protection switching.

Although dynamically establishing connection so as to dynamically utilize bandwidth resources depending on client's demands has been implemented at present, there are still some disadvantages existing in the current service connection setting up and service restoration and protection technique as set forth in foregoing:
(a) Although the transmission network is a multi-layer network, the conventional protection and restoration mechanisms are mainly directed to the single layer network, without taking the relations of client-service layer of the network into account, so as to cause a severe waste of path resources. For example, if the protection and restoration are reserved for a VC-4 connection in a SDH VC-4 service layer network, however when there is no client service loaded on the VC-4 connection, the reservation for the protection and the restoration will definitely waste the path resources and lead to redundancy to the system. Moreover, it may also waste path resources severely without consideration of setting up service layer connection based on the request of the client layer.
(b) The existing service restoration techniques are accomplished through either setting up an alternate connection for restoring the service upon encountering a fault, which leads to low efficiency of restoration, or pre-assigning alternate connection routes and reserving path resources for these alternate connections, without consideration of the dynamic changes of network topology and resources to determine the reservation of the alternate connections, and also without consideration of maintenance of the alternate connection, therefore it is unlikely to effectively take advantage of an existing alternate connection with reserved resource to be used in the event of a fault. For example, if an alternate connection with reserved resource for restoring service fault can not be set up successfully, the mechanism of further trying to dynamically rebuild an alternate connection according to the changes of the network resource is not implemented.
(c) The prior art does not provide a solution to avoid new failures caused by the process of service reverting itself, after eliminating the original faults..
(d) The present solutions still do not perfectly solve the problem of the resource conflict, since the entire network does not have a unique priority for setting up of the service connection upon occurrence of resources conflict. For example, when a resource allocation conflict for a link connection is encountered when establishing a service connection traversing this link, the conventional method is to determine the priority according to the priority of the NEs' ID at two opposite ends of the link, however this priority is not unique for all connections of the entire network, which will result in an insolvable conflict. For instance, given an NE located at a left end (namely A end) of link L1 has a higher ID priority than that of another NE located at a right end (namely Z end) of the link L1, while for a link L2, an NE at a left end (namely A end) of the link L2 has a higher ID priority than that of an NE located at a right end (namely Z end) of the link L2. During the establishment of end-to-end connections c1 and c2, c1 traversing A end of L1 and c2 traversing Z end of L1, there is a conflict between c1 and c2 as they are competing a common link connection resource. According to the priority, c1 has the priority to snatch the link connection resource, and c2 has to abandon the usage of this link connection resource. However, when c1 and c2 compete the link connection resource on link L2 again, and if it is c2 traversing A end of L2 first, then c2 has the priority to snatch the link connection resource. As these two similar service connections have different relative priority level in these two competition processes, it is likely that neither connections will be set up due to the conflict-avoiding.

### SUMMARY OF THE INVENTION

It is an object of the present invention to provide a method for service connection setting up, service restoration and service protection in a reconfigurable
network constructed by SDH/SONET or WDM network elements, which can effectively make use of transmit channel resources to set up service connection in an optical network, and restore service effectively in the event of optical network fault and it affects the service, and take reliable and effective mechanism to execute service reverting when the optical network fault disappear and optimize network resource during the operations of restoring and retrieving.

Another object of the present invention is to provide a method for service connection setting up and service restoration and service protection in an optical network, which uses virtual connection technique to restore service fault, and considers relations between client layer connection and service layer connection, and dynamically establishes service layer connection, and then restores and protects the service layer connection according to the protection and restoration request of the client layer connection, so it can utilize the optical network resources fully.

The features of the method and apparatus according to the present invention are defined in the independent claim.

A method for establishing, restoring and protecting service connection in an optical network which comprises a transport plane system and a control plane system, wherein said transmission plane system comprises multiple transmitting network elements, each transmission network element uniquely corresponding to one control node in said control plane system, wherein the method comprises steps of:
step 1: initiating a timer for setting up a virtual connection at each control node;
step 2: upon reception of a service request, determining link connections and subnet connections by the control node, and notifying the transmission plane system to set up or allocate a corresponding link connections and to set up a subnet connections, so as to establish a regular connection supporting the requested service;
step 3: after the expiration of the timer for setting up the virtual connection of the control node, initiating a search for service requests for which virtual connections need to be set up, and initiating a process of setting up the virtual connection for each searched service request which is in line with criteria for setting up the virtual connection, and then re-initiating a timer for setting up new virtual connections;
step 4: determining a route in a source route mode to set up a virtual connection for a service;
step 5: initiating service restoration according to the service priority, when a service fault occurs due to a failure of the regular service connection;
step 6: implementing the operation of reverting to the regular service connection for a service-revertible request in response to eliminating of the failure which occurred in the original regular service connection after the service restoration is accomplished.

According to one aspect of the present invention, wherein the timer for setting up the virtual connection in step 1 is initiated in succession of the initialization of the control plane system, or during the existence of the regular service connection after its establishment, when there is a need to apply a virtual connection to restore service fault according to the control system strategy and service priority.

According to one aspect of the present invention, wherein in step 2, when the control plane system receives a service request from the client layer, if currently there is no sufficient client layer connection resources provided by the service layer for setting up a connection for the current service, then a service layer connection request may be activated in a dynamic way, firstly a service layer connection supporting the client layer service is set up, then a client layer connection is set up, wherein a protection connection and a virtual connection of the service layer may be established or released dynamically according to the request of the protection and restoration of the client layer service.

According to one aspect of the present invention, wherein when a set of client layer services with the protection and restoration request are transmitted on a same service layer connection; the working connection and the protection connection for a service are allowed to partially share a common route, and the working connection and the protection connection are allowed to use common link connection resource on the common route, in case there is insufficient network resource.

According to one aspect of the present invention, wherein information of all the link connection relations contained in the service layer connection (as a link) is obtained by the control nodes corresponding to the transmission network elements located at two ends of the service layer connection through exchanging information of the adapted client layer path the two ends of the service layer connection, in or in succession to the process of setting up of the service layer connection.

According to one aspect of the present invention, wherein in step 3 the virtual connection for the service is set up subject to following conditions:
- the regular service connection has been set up;
- the virtual connection mode is requested to be used to provide a reliable fault restoration mechanism for the service according to the service priority and the control system strategy.

According to one aspect of the present invention, wherein in step 4 setting up a virtual connection comprises steps of:
- determining a virtual connection route in a source route mode;
- determining the selection of link connection resource and determining the subnet connection relation by the control node corresponding to each network element traversed by the virtual connection, and notifying the transmission plane to set up or allocate the link connection and set up the subnet connection, after the virtual connection route has been determined.

According to one aspect of the present invention, wherein in step 4, the strategy for determining the route comprises: disjointing of routes including disjointing of nodes and links should be considered as much as possible for setting up virtual connection and regular service connections, the virtual connection route should not be in a common Shared Risk Link Groups of the original regular connection route as much as possible; and sharing a part of common route is allowed between the virtual connection and the regular connection of a same service in case the network resource is insufficient;
the strategy for selecting the link connection resources constructing the virtual connection comprises: the link connection resources traversed by the virtual connection can be shared by other virtual connections, and snatched by other regular service connections; and
the strategy for whether or not notifying the transmission plane to set up a link connection after the selection of the link connection resource constructing the virtual connection comprises: if the transmission network element is capable of monitoring the link connection traversed by the virtual connection independently, then the transmission network element is notified to set up a link connection, but not notified to set up a subnet connection.

According to one aspect of the present invention, wherein the strategies for selecting the link connection resource constructing the virtual connection comprises steps:
- notifying the control nodes traversed by the virtual connection with the information of the Shared Risk Link Group of the regular service connection by the source control node, at the beginning of setting up the virtual connection;
- recording in each control node the information of the Shared Risk Link Group of the regular service connection corresponding to the virtual connection for each link connection which is used by the virtual connection;
- sharing a common link connection resource by a virtual connection and a regular service connection of a same service in case the network resource is insufficient, when the virtual connection and the regular connection share a part of common route;
- sharing a common link connection resource by two virtual connections of two services, if the Shared Risk Link Group of the regular connections of the two services are different;
- not sharing a common link connection resource as much as possible by two virtual connections of two services, if the Shared Risk Link Groups of the regular connections of the two services are partially different;
- not sharing a common link connection resource by two virtual connection of the two services, if the Shared Risk Link Group of the regular connections of the two services are identical.

According to one aspect of the present invention, wherein the control node broadcasts the link status information of each link during the setting up of the service connection, the link information being broadcasted along each layer of link, so as to update the network topology in time when link information changes.

According to one aspect of the present invention, wherein the said link information includes: number of spare link connections, number of link connections which can be snatched, and number of spare link connection which can be used by virtual connections.

According to one aspect of the present invention, wherein the link status information further includes number of link resources to be shared by the virtual connections, and number of link resources to be shared by the virtual connections should be subtracted by one when the number of the virtual connections sharing the common link connection resource reaches a maximum value.

According to one aspect of the present invention, wherein in step 5 the initiating of the service restoration further includes steps:
- initiating a restoration waiting timer;
- checking whether there is a virtual connection free from fault, if a fault still exists among all the regular connections of the service, when the restoration waiting timer expires;
- if a virtual connection being free from fault exits, sending out a command of "USE" from the service source control node to the control node of a next transmission network element traversed by the virtual connection, and sending out a command of "USE" to a control node of a next transmission network element traversed by the virtual connection from each control node which received the "USE" command, and then performing the "USE" operation of the virtual connection by: notifying the transmission network elements to set up a subnet connection by the source control node and all the control nodes received the "USE" command; sending a further notification to the transmission network elements to set up the link connection if the transmission plane system has no link connection established prior to the setting up of the virtual connection; altering the virtual connection into a real connection as an alternate connection if the virtual connection has a corresponding subnet connection and a link connection in the transmission plane system;

- switching the service from the regular connection to the alternate connection to restore a service fault, if the virtual connection is successfully altered into the real connection, and the virtual connection is free from fault currently;
- setting up a new alternate connection by a dynamic rerouting to restore service fault, if there is no available virtual connection free from fault or the virtual connection fails to be set up; and
- switching the service from the regular connection to the alternate connection for transmission so as to restore the service fault, if the service fault has not been eliminated, when the restoration waiting timer expires.

According to one aspect of the present invention, wherein if a service connection to be restored is a service layer connection, two opposite ends of which are traversed by signal of multiple client layer connection, then all client layer services are switched to the alternate service layer connection after the setting up of the alternate service layer connection; when the control node is aware that the current service connection is a service layer connection, and is controlling the use of the service layer connection by the client layer connection, then the restoration will not be initiated, if the service layer connection occurs a fault and but dose not carry a client layer connection signal.

According to one aspect of the present invention, wherein if a service restored has no service-revertible request, the attribute of the alternate connection will be changed to the regular connection, and the original regular connection will be deleted, or the original regular connection and the alternate connection together construct a regular service connection being composed of a working connection and a protection connection, or the original regular connection will be changed to the virtual connection of the service; if the service restored has a service-revertible request, then the service will be reverted to the regular connection when the original regular service connection fault is eliminated, the reverting process comprises steps of:
- initiating a reverting waiting timer;
- setting up a regular connection according to the information of the original regular connection stored in the control node, if the original regular connection has been deleted during the restoration;
- changing the virtual connection to the real connection first so as to rebuild the original regular connection, if the original regular connection has been altered into the virtual connection instead of having been deleted during the restoration;
- reverting the service to the original regular connection for transmission, if the original regular connection has been set up, when the reverting waiting timer expires.

According to one aspect of the present invention, wherein an operation of transmission in parallel and receiving in precedence for original connection and alternate connection is performed at source and destination ends of the service before the service leaving the alternate connection, in order to avoid new faults due to a large time difference of performing reverting operation between the source and the destination network elements.

According to one aspect of the present invention, wherein if a service fault occurs again after the restoration and an alternate connection exists, the alternate connection will be deleted and a restoration will be reinitiated.

According to one aspect of the present invention, wherein in step 2, the setting up of the service connection including the setting up of the virtual connection further comprises allocation process of the link connection resource, the allocation process is performed based on a unified competition rule for the entire network in order to solve the allocation conflict of link resource, wherein the criteria of this competition rule includes:(1) competing based on the service connection priority; (2) using the source transmission NE ID of the connection as the connection priority; (3) assigning different connection ID for different connections by the control nodes in case that the source of the connection is a same transmission NE, and determining the priority by the assigned connection ID.

According to one aspect of the present invention, wherein the said control node includes topology information of each layer of the optical network, which includes the link information, the channel resource status information of each optical transmission network element controlled by corresponding control node, wherein the type of the signal of the link connection contained in all links in the topology information of each layer is identical.

According to one aspect of the present invention, wherein the said transmission network element is replaced by a subnet which is constructed by multiple network element devices.

### BRIEF DESCRIPTION OF THE DRAWINGS

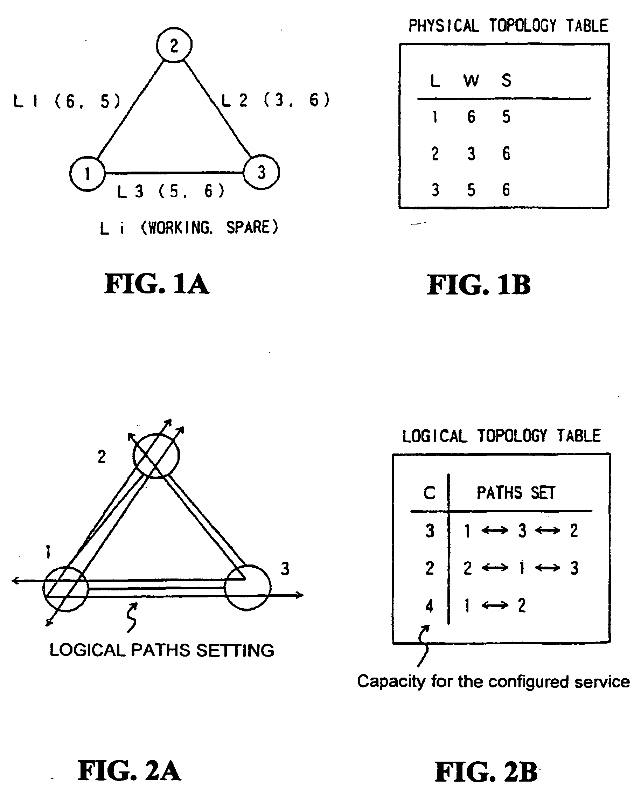

Figs. 1A and 1B show physical topology information of a conventional optical network;
Figs. 2A and 2B show logical paths setting and logical topology information of the conventional optical network;
Fig. 3 illustrates architecture of an optical network system in accordance with the present invention;
Fig. 4 illustrates an application of a virtual connection in according with to the present invention;
Fig. 5 illustrates relation of a service-client layer link connection in accordance with the present invention;
Fig.6 illustrates an exemplary application of the service-client layer network connection in accordance with the present invention.

### DETAILED DESCRIPTION OF THE PREFERRED EMBODIMENTS

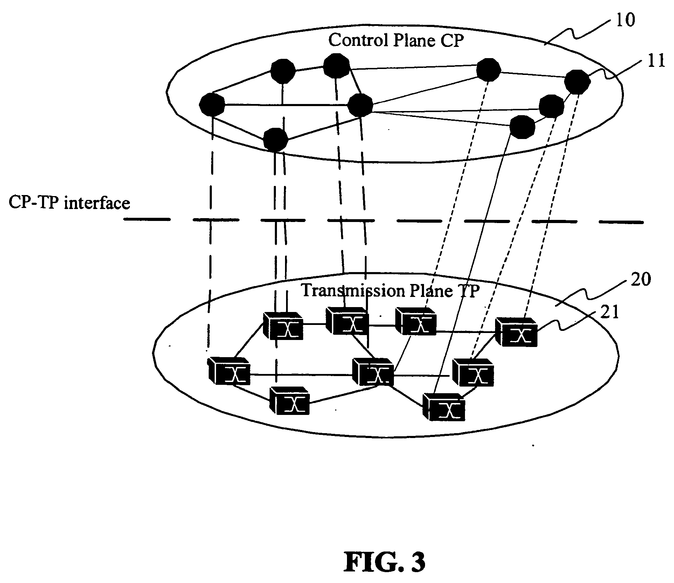

Fig. 3 illustrates a simplified exemplary architecture of an optical network in accordance with the present invention, wherein said optical network is a reconfigurable network constructed by SDH/SONET (Synchronous Digital Hierarchy/Synchronous Optical Network) network elements (NEs) or WDM (Wavelength Division Multiplexing) network elements (NEs). Herein, the term "reconfigurable" means that the NEs are capable of establishing a cross-connection between any two optical transmission channels, i.e. transferring a transmission signal from one channel to other one in an intercrossing way, and various NEs are of different multiplexing capability, so as to enable selectively adapting to an operational channel to set up an operational link connection in real time. These channels may be various signal transmission channels, such as channels of regenerated and multiplexing sections, and signal channels, wavelength channels below the multiplexing sections, which are supported by SDH/SONET devices or WDM devices. In the context of the specification, the channel cross-connection is also called as subnet connection, wherein the network element as considered as a mini-sized subnet according to the present invention.

With reference to Fig.3, the optical network according to the present invention comprises a control plane system 10 and a transmission plane system 20.

The transmission plane system 20 is a reconfigurable optical network constructed by multiple transmission NEs 21 intended for allocating or setting up link connections and subnet connections, wherein the transmission NEs 21 are selected from SDH/SONET NEs or WDM NEs. Communication are set up between control nodes 11 corresponding to adjacent transmission NEs 21, each one control node 11 being stored with addresses of other control nodes 11 corresponding to the transmission NEs 21 adjacent to the transmission NE 21 that is controlled by said control node 11.

The control plane system 10 includes multiple control nodes 11, and each control node 11 corresponding to a unique one transmission NE 21. Each control node 11 is store with the topology information for each layer of the entire optical network and information of the channel resource status for the transmission NEs under the control of the control node (for example, the channel availability), and uses these information to control the system for setting up and maintaining the connection, and for updating the network topological information over the time as it is changing. These topological information include the topological information of each layer of the optical network, said the topological information of each layer includes the link information and the channel resource status information of the optical transmission NE controlled by each control node, wherein, the link connection signal contained in all links in each layer topological information are of same type. Furthermore, each control node 11 is stored with the connection information of the transmission NEs controlled by said control node 11. Communication are set up between the control nodes 11 corresponding to the adjacent transmission NEs 21, and each one control node 11 is stored with addresses of other control nodes 11 of the transmission NEs 21 adjacent to the transmission NE 21 that is controlled by said control node 11, therefore communication between the adjacent nodes can be set up directly, and the communication between non-adjacent control nodes can also be set up through the tandem control nodes for forwarding messages. Besides that, some control nodes 11 are not only responsible for maintaining the topological information for the entire network, but also responsible for route computation during the connection setting up for the entire network. The main functions of the control plane include setting up, releasing and maintaining end-to-end connection. Here, the end-to-end connection is composed of link connection and subnet connection according to the present invention, and also called as connection for short.

Every control node 11 may further communicate with the corresponding transmission NE 21 to control the channel resource used by the transmission NE 21, and obtain the status information (for example, whether a link fault occurs) of the channel resource, and control the transmission NE 21 to set up a link connection and a subnet connection. During the establishment of the end-to-end connection supporting a certain service, all control nodes 11 of the entire network cooperate with each other to determine the connection being composed of multiple link connections and subnet connections, and then the transmission NEs 21 corresponding to the respective control nodes accomplish the allocating or setting up of the link connections and the subnet connections. The control nodes 11 can be either real hardware devices which reside in or separate from the corresponding transmission NE controlled by itself, or software applications embodied in the NEs.

It should be explained that, if the control plane decides to use a link connection, which does not exist in the transmission plane, a notification for setting up this link connection should be sent to the transmission plane; if the control plane needs to use a link connection existing in the transmission plane, a notification for allocating this link should be sent to the transmission plane. The link connection is determined by channel address of opposite ends of the link in its service layer.

Moreover, in order to make the description easier, a definition of virtual connection is given in the present invention: an end-to-end connection being established across multiple networks by the control plane system. From the control plane's point of view, the link connection and the subnet connection are determined, but the NEs of the transmission plane are not yet notified to set up the subnet connection, even the link connection in the transmission plane is not set up or allocated, that is to say, the connection is only remained at the control plane, but no physical connection exists.

Contrary to the virtual connection, the real connection is the connection existing both in the transmission plane and the control plane at the same time. The real connection is also commonly called as connection in before, so that for the purpose of short, the connection in the following context is a short expression for the real connection, except there are any special notes.

"Service" in the present invention means provisioning a connection between a first channel location at a source NE and a second channel location at a destination NE at for transmission signal traversing there through, and the channels are completely occupied by given transmission signal, wherein said service is either unidirectional or bidirectional service. In order to support the transmission of the service signal, the end-to-end connection should be set up for carrying the service signal, so a service request is also called as a service connection request in the context of the present application.

There are four basic operations being involved in the inventive method used in the optical network in accordance with the present invention: establishment, protection, restoration and reversion of the service connection. The establishment of the service connection includes setting up regular service connection, virtual service connection and alternate service connection. The protection, restoration and reversion of the service connection are dependent on the operation of the establishment, maintenance and cancellation of the service connection, wherein the service protection is accomplished by setting up working connection and protection connection in simultaneity, and the service restoration is accomplished by dynamically setting up an alternate connection for the original regular service connection in the event of service fault. According to the present invention, the regular service connection is established upon reception of a service request, it can be a working connection only, or a connection composed of both working connection and the protection connection.

According to the present invention, the method for establishment, restoration and protection of the service connection in an optical network mainly comprises steps as follows:
- step 1, initiating a timer for setting up virtual connection at each control node;
- step 2, upon reception of a service request by a control node, determining link connections and subnet connections by the control node, and notifying the transmission plane system to set up or allocate corresponding link connections, and set up subnet connections, so as to establish a regular connection supporting the requested service;
- step 3, after the expiration of the timer for setting up the virtual connection of the control node, initiating a search for service requests for which virtual connections need to be set up, and initiating a process of setting up the virtual connection for each the searched service request which is in line with criteria for setting up the virtual connection, and then re-initiating a timer for setting up new virtual connections;
- step 4, determining a route in a source route mode to set up the virtual connection for a service;
- step 5, initiating service restoration process according to the service priority, when a service fault occurs due to a failure of the regular service connection;
- step 6, implementing the operation of reverting to the regular service connection for a service-revertible request in response to eliminating of the failure which occurred in the original regular service connection after the service restoration is accomplished.

Wherein, in step 1, the timer for setting up the virtual connection may be initiated in succession to the completion of initialization of the control plane system, it may also be initiated whenever there is a need to apply a virtual connection to restore service faults according to the control system strategy and the service priority, or during the existence of the regular service connection after its completion of establishment. The timer for a control node is only responsible for setting up all the virtual connection for the NE's nodes with the service sources being controlled by said control node. The timer may be dismissed when there is no request for setting up the virtual connection.

In step 2, the regular connection can be a working connection only, or connections composed of both working connection and protection connection. The service connection and the protection connection route are determined in a source route mode which supports explicit route, and disjointing of routes including disjointing of nodes and links should be taken into account as much as possible. Two connections with a common Shared Risk Link Group should not use a common link connection resource as much as possible, however, when the network resource is limited, it is allowed that the working connection and the service protection connection can share a part of common route, and also use a common link connection resource on that common route subject to no interference with each other. The working and the protection connection are fully operational under the responsibility of the transmission plane in the manner, such as transmitting in parallel and receiving in precedence.

When the control plane receives a service request, if the service request is for the service layer connection, the control plane system will dynamically set up or dismiss the protection connection and the virtual connection in response to that service connection request from the client layer. In case there is no sufficient client layer connection resource for the current service layer connection to support the client layer service to set up a connection, then a service layer connection supporting the client layer connection can be set up in a dynamic way, and the client layer connection can be set up afterwards. In order to make use adequately of the service layer resource, the service layer connection may not be set up at the initial configuration of the network, but set up upon receiving the request from the client layer, according to the distribution of the network resources. This kind of service layer connection which is set up in response to the request of the client layer may be dismissed by the control plane when it is no longer used by the client layer service. The connection set up using the mechanism in accordance with the present invention is capable of supporting bidirectional signal transmission, therefore there is no need to set up two end-to-end connections in two opposite directions for supporting the bidirectional service.

Furthermore, the control nodes corresponding to the transmission NEs at the two ends of the service layer connection should be aware of the kinds of the client layer link connection supported by the service layer connection, for this purpose, the control nodes corresponding the transmission NEs at the two ends of the service layer connection will get information relating to all the link connection relations of the service layer connection acting as a link through the exchanging of information relating to the adapted client layer path at the two ends of the service layer connection.

The establishment of a regular connection comprises steps as follows:
a) upon reception of a service request, determining the setting up strategy of end-to-end connection according to the priority of the service request by a control node;
b) initiating the establishment of the connection by the control node corresponding to transmission NEs, and then setting up a regular connection for the service request through the interaction between the control node and other control nodes, and interaction between the control node and the transmission NE controlled by this control node.

Moreover, during the establishment of the service connection, since the control node is requested to broadcast the link information, and the optical network is a multilayer network, when the service layer link contains multiple layers of link connections, the service layer link will be further divided into multiple links, so that each link contains link connections of a same layer, namely the signal type of all link connections contained in the links is identical, wherein the signal type of the link connection is consistent with bandwidth type or channel type in the service request. The broadcast of the link information is performed along every link. For example, a link with a port rate of STM-1 can be constructed by five SNPP links: link STM-1, link VC-4, link VC-3, link VC-12, link VC-11, when its various adaptive capacities are further considered.

In step 3, when the timer for setting up the virtual connection expires, all services from the service sources of the NEs controlled by the control nodes should be checked, a virtual connection for a single service could be set up only subject to the following conditions: (1) the regular service connection has been set up already; (2) the virtual connection mode is used to provide a reliable fault restoration mechanism for service, according to the service priority and the controlling system strategy, it is operational that one service is set up with multiple virtual connections, and the establishment of the virtual connections for different services is processed in parallel. A new timer for setting up the virtual connection is rearmed after all the service virtual connections have been established. Generally, the length of the timer is far larger than the time used to set up a connection. The reason for rearming a timer is to monitor whether there are new service requests for setting up the virtual connection, and on the other hand, is to stimulate setting up a virtual connection again at other time in order to successfully set up the virtual connection in the event of a previous failure of setting up this virtual connection, since the network resource is changing dynamically.

To set up a virtual connection for a service, the source route mode is used to determine the route firstly. The strategies for determining route are as follows: disjointing of routes including disjointing of nodes and links should be considered as much as possibly for setting up virtual connections and regular service connections, the virtual connection route should not be in the same Shared Risk Link Group of the original regular connection route as much as possible; sharing a part of common route is allowed between the virtual connection and the regular connection of a same service in case the network resource is insufficient.

When a virtual connection route is determined during the setting up of the virtual connection, each control node corresponding to the NE traversed by the virtual connection takes in charge of determining the selection of the link connection traversing the NEs and determining the subnet connection relation, and the virtual connection is determined only after all of the link connection and the subnet connection relation requested by the virtual connection are determined. Since the subnet connection is determined by the link connection, so the key of setting up a virtual connection relies on the determination of all link connection resource for the construction of the virtual connection, and the strategies for determining the link connection resource is that the link connection resource traversed by the virtual connection can be shared by other virtual connections, and snatched by regular connections of other services. The detailed strategies are as follows: (1) If the regular connections of two services belong to different Shared Risk Link Groups, then it is applicable for the virtual connections of these two services to share a common link connection resource; (2) If the regular connections of two services partially belong to a common Shared Risk Link Groups, then the virtual connections for these two services should not share a common link connection resource as much as possible; (3) If the Shared Risk Link Groups of the two regular service connections are completely identical, the two services virtual connections can not share a common link connection resource; (4) In order to take the use of the Shared Risk Link Group into account, each control node should record the information of the Shared Risk Link Group of the regular service connection which belong to same service with the virtual connection, and moreover the source control node should notify the control nodes traversed by the virtual connection regarding the information of the Shared Risk Ling Group of the regular service connection, at the beginning of setting up of the virtual connection. Here the information of Shared Risk Link Group for a service may be constructed by multiple Shared Risk Link Groups.

Additionally, if the transmission NE is capable of monitoring the failure of the link connection traversed by the virtual connection independently, i.e. to monitor the link connection not depending on its service layer link, then it is applicable to notify the transmission NE to set up a link connection, but not to notify the transmission NE to set up a subnet connection.

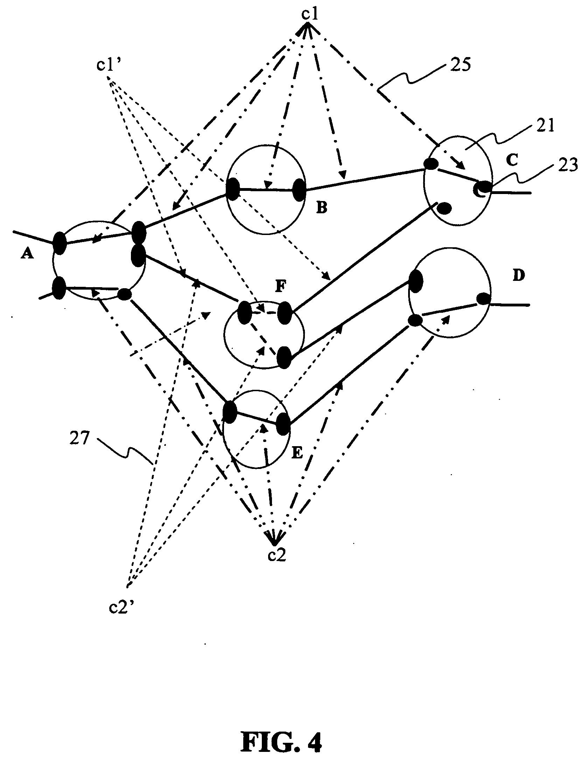

Fig. 4 illustrates an exemplary application of the virtual connection, an exemplary optical network is constructed by A, B, C, D, E, F transmission NEs 21, wherein there are two regular connections c1 and c2 (denoted by dash-dotted line labeling 25) and two service virtual connections c1' and c2'(denoted by dash line labeling 27) for two services in respective. A Subnet Point (SNP) 23 is located at a channel corresponding to the service source or at a channel the destination. Similar to the regular connections c1 and c2, the virtual connections c1' and c2' are also constructed by subnet connections and link connections respectively, the difference is that the subnet connection of the virtual connection is virtual, that is the NEs do not open the switch of the cross-connection supporting this subnet connection. As shown in the Fig. 4, the virtual connections c1' and c2' may share a common link, as their regular connections c1 and c2 are not in a common Shared Risk Link Group.

Furthermore, when the transmission link information is changing, the control node should broadcast the link information (for example, broadcasting the link information through OSPF), to update the network topology in time. The broadcasted link information includes: (1) the number of spare link connections; (2) the number of link connections which can be snatched; (3) the number of spare link connection which can be used by virtual connections. Moreover, in order to consider the share of the common link resource among the virtual connections in the route computation, the link information also includes the number of link resources to be shared among the virtual connections. To avoid any risks of failure to restore because too many virtual connections share a common link connection at same time, a maximum number of link resources to be shared by the virtual connections could be pre-defined. The number of link connections to be shared by the virtual connections of the link should be subtracted by one, when the number of the virtual connections sharing the common link connection reaches the maximum value of sharing. In addition, when an original link disappears, the link information should be reported: said link is deleted in the network.

The operations of setting up, releasing and maintaining the real connections and the virtual connections can be accomplished by using the RSVP and CR-LDP protocol. From the control plane's point of view, the construction of the virtual connection and the real connection is completely identical, so their operations and maintenance are mostly same, including the process of fault information. In addition to the above, the virtual connection related operations further comprises following processes: (1) indicating connection attributes, a real connection or a virtual connection in the connection request; (2) adding a command of "changing a real connection into a virtual connection" in relating to a real connection; (3) adding a command of "changing a virtual connection into a real connection" in relating to a virtual connection; (4) notifying the source control node with the information whether the resource of the virtual connection is snatched by other real service connections or the snatch is dismissed, so as to enable the source control node to determine whether the connection should be deleted or not according to the information, e.g. the virtual connection can be deleted in case it is snatched by the regular service connection; (5) notifying other virtual connections of the shared link connection resource, when a virtual connection is changed into a real connection.

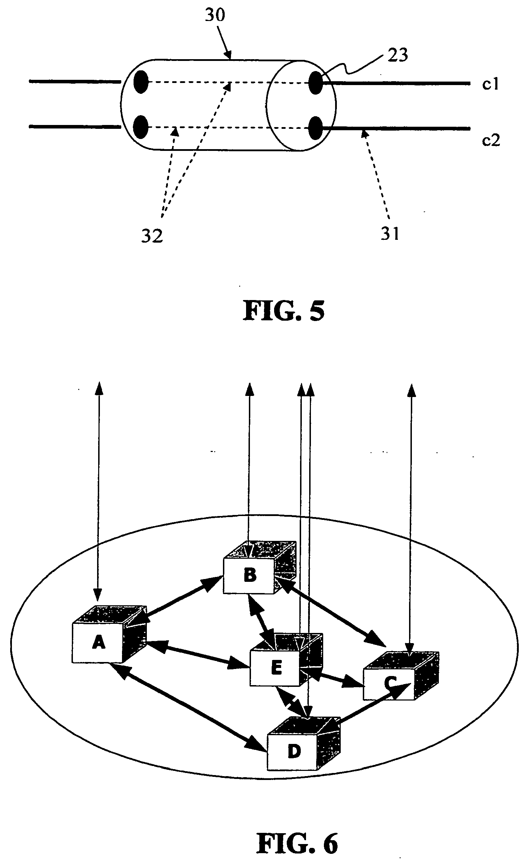

Fig. 5 illustrates the relation of the service-client layer link connection. The service layer connection 30 includes multiple client layer connections, such as client layer connections c1 and c2 (referred as 31), and the service layer connection may traverse multiple transmission NEs. There are adjacent subnet points (SNP) 23 located at two ends of the service layer connection 30, i.e. for each pair of SNPs, a allocable or configurable physical link connection 32 exist at the transmission plane.

If the service connection belongs to the service layer connection which may be either set up directly by the control plane in response to the connection request of the client layer service, or set up in response to the notification from the network administrator through the control plane, or a link irrespective with the connection establishment of the control plane, the control plane can dynamically set up the service layer protection connection and the service layer virtual connection for the service layer connection which is also called as the service layer working connection. If the control node finds that the service layer connection is carrying with a client layer connection which is needed to be protected, then the service layer protection connection and the service layer virtual connection corresponding to the service layer connection is to be set up. Moreover, as the service layer working connection is set up dynamically by the control plane in response to the service request of the client layer, if the service layer connection does not carry a client layer service connection, then the service layer protection connection and virtual connection can be dismissed. Further more, when the service layer working connection does not carry any client layer connection, the service layer working connection can also be dismissed. The service layer protection connection and service layer virtual connection are set up in a same way as mentioned in foregoing description. In order to make use of the network resource better, a set of client layer services with protection and restoration request can be transmitted on a same service layer connection.

When a service fault occurs due to a failure of the regular service connection, a service restoration should be initiated in case a restoration request is determined according to the priority of the service, wherein the service source control node, i.e. the control node corresponding to the service source NE, takes in charge of the service restoration. Here, the fault refers to the failure of service transmission that is caused by the fault of the transmission plane for supporting the service connection.

After initiating the restoration, firstly a restoration waiting timer is provided in order to avoid any vibration caused by the transmission plane fault. If a fault still exists among all the regular connections of the service, when the restoration waiting timer expires, a next step is to check whether there is a virtual connection free from the fault. If a virtual connection free from the fault exists, the service source control node will send out a command of "USE" to the control node of a next transmission NEs traversed by this virtual connection, and each control node is also responsible for sending out a command of "USE" to a control node of a next transmission NE traversed by the virtual connection, thus the source control node and all the control nodes which has received the "USE" command respectively notify the transmission NEs to set up subnet connections. If the transmission plane has no link connection established prior to the setting up of the virtual connection, a further notification should be sent to the transmission NE for setting up the link connection, so as to alter the virtual connection to a real connection. In order to increase the efficiency of restoration, each NE may send out a command "USE" to a control node for a next transmission NE prior to the setting up of the subnet connection and the link connection.

If a virtual connection is successfully altered into a real connection which is called as an alternate connection, and the alternate connection is currently free from fault, then the service will be switched from the regular connection to the alternate connection, and the restoration is successfully completed finally.

If the service fault cannot be restored by a virtual connection, for example, in case there is no available virtual connection free from fault, or the virtual connection fails to be set up, then a new alternate connection will be set up by a dynamic reroute to restore the service faults.

In the above restoration operations, if a service connection to be restored is a service layer connection, opposite ends of which are traversed by signal of multiple client layer connections, then all client layer services are switched to the alternate service layer connection after the setting up of the alternate service layer connection. In order to make use of the optical network resource better, when the control node is aware that the current service connection is a service layer connection, and is controlling the use of the service layer connection by the client layer connection, then the restoration will not be initiated, if the service layer connection occurs a fault but dose not carry a client layer connection signal which is needed to be protected.

The regular connection can be deleted either prior to or after the establishment of an alternate connection, during the restoration period. However, if the service restoration is of a service-revertible type, that is the service is required to be reverted to the regular connection after the fault of the original regular connection disappears, then the regular connection may not be deleted, or the real connection is changed to a virtual connection first during the restoration process, that is to say, the NE traversed by the virtual connection may dismiss the subnet connection, but may not dismiss the link connection. If the service restoration has no service-revertible request, the attribute of an alternate connection will be changed to a regular connection, and the original regular connection will be deleted, or the regular connection and the alternate connection together construct a regular connection being composed of the working connection and the protection connection, or an original regular connection is changed to a virtual connection. It should be noted that in case of the service-revertible request, the regular connection can be deleted in order to avoid effecting the restoration due to the insufficient network resource, but the source control node should record all the route information of the regular connection and channels information contained in the regular connection.

In order to further increase the restoration efficiency, a "USE" operation for a virtual connection or a dynamic reroute can be run to establish an alternate connection during the waiting period of the restoration, but the service should only be switched to the alternate connection from the regular connection after the expiration of the restoration waiting timer.

If the service faults again after the restoration, a further service restoration could be run, where the operation processes are: deleting an alternate connection first in case there exist any, and then repeating the foregoing restoration processes.

For a service having completed a restoration, when the fault on the regular connection of the service disappears, the service will be reverted to the regular connection, in case the service has a request for service-reverting. If the regular connection has been deleted during the restoration, the control node will set up the regular connection according to the information of the regular connection stored therein. If the regular connection is altered into the virtual connection during the restoration, then the virtual connection should be changed to a real connection first. Finally, the service can be reverted to the original regular connection for transmission. To avoid new faults during the reverting operations, for instance, when time difference for performing reverting operation between source and destination NEs is large enough to cause a new service fault, the operation of transmission in parallel and receiving in precedence at the two ends can be performed first, and the alternate connection can be left only after the completion of operation of transmission in parallel and receiving in precedence at the two ends. In addition, the alternate connection may be not deleted according to the strategy after restoration, for example, an alternate connection can be changed to a virtual connection or a service protection connection. To avoid a situation of repeatedly reverting and restoring due to the unstable fault status, a reverting waiting timer is provided after the service connection fault disappears. When the timer expires, the service can be reverted to the regular connection, if there is no fault occurring again to affect the regular connection.

As described in foregoing description, the link connection resource is allocated or set up during the setting up of the service connection and also during the setting up of the virtual connection. It is likely that allocation conflict of the link resource will happen, as the source for initiating the connection operation is control nodes corresponding to different transmission NEs. To solve this confliction problem, a unified competition rule should be used in the entire network. The criteria of this competition rule includes: (1) competing based on the service connection priority; (2) using the source transmission NE ID of the connection as the connection priority, for example, the less of the value of the NE ID, the higher of the priority level; (3) assigning different connection ID for different connections by the control nodes in case the source of the connection is a same NE, and determining the priority by the assigned connection ID. The connection with a higher service priority has been given a right of using the link connection resource in precedence to the connection with a lower service priority. For the connections at same service priority level, the connection with a higher priority of the source connection NE ID has been given a right of using the link connection resource in precedence to the connection with a lower connection NE ID. For the connections with same service priority level and same source connection NE, the precedence of using the link connection resource is determined by the assigned connection ID for the connections. It is apparent that this competition rule determines a unique precedence for the entire network, which solves the problem of conflicts totally. It can be noted that instead of using the connection NE ID as the priority for the competition, a unique priority can also be applied for the entire network, which is to apply the unique priority through a centralized control node of the entire network in a dynamical way, however, this approach has been proved with low efficiency and high complexity in its processing operation.

When the service layer connection fails, the control node with the relation information of the service-client layer connection will coordinate the operation for the fault restoration of the service-client layer network. When the service layer connection fault influences the client layer connection with a request of "need to be restored in the event of faults", if the service layer can not restore the fault by itself, the client layer is notified about the fault information and the service restoration will be initiated by the client layer, or else the fault restoration will be initiated by the service layer without notifying the client layer about the fault information in advance. If the service layer restoration fails, the client layer will be notified about the fault information, and then, the client layer network will initiate the service restoration.

In the application of the technical solution in accordance with the present invention, the node of the NE can be replaced by a generic subnet which is constructed further by multiple NEs, and the inventive method can also be applied to control the transmission plane system constructed by the generic subnet.

Now the detailed processing steps of the service protection and the service restoration will be described with reference to Fig.4, wherein all the transmission NEs support the service connection establishment based on VC-4 granularity.
(1) A timer for setting up a virtual connection is initiated by each control node for controlling a corresponding transmission NE;
(2) The control node A' of the NE A receives two service requests, a first request of a service 1 is a VC-4 signal service traversing the NEs A and C across the network, a second request of a service 2 is a VC-4 signal service traversing the NEs A and D across the network. According to the service priority level of these service requests, the control node determines the strategy for setting up end-to-end connections of the service, wherein the strategy is to set up a regular connection and a virtual connection, and restore service faults in the event of service failure.
(3) The control node A' of the NE A initiates the setting up the connection by using signaling of RSVP (or CR-LDP). The connections c1 and c2 of the service 1 and the service 2 are set up through the interaction between this control node and other control nodes and the interaction between the control nodes and transmission NEs, as shown in Fig.4.
(4) When the virtual connection setting up timer of the control node A' expires, it begins to search for the service needed to set up a virtual connection. As a result, either the service 1 or the service 2 needs to set up a virtual connection, then the control node computes the route of the virtual connection. For the service 1, the Shared Risk Link Group traversed by the virtual connection must be different from the regular connection, i.e. the virtual connection must not have a common link with the route: A→B→C, so the virtual connection route of the service 1 is determined as: A→F→C; for the service 2, since there is no link connection resource being available for the virtual connection on the link between NEs F and D, the virtual connection of service 2 can not be set up at that moment.
(5) The control node A' is in charge of setting up the virtual connection c1 of the service 1 through sending out the request for setting up the virtual connection to other control nodes by using signaling of RSVP, wherein the request for setting up the virtual connection contains the route information of the regular service connection of this virtual connection. The control nodes of transmission NE traversed by the virtual connection interact with each other and exchange information there between, and determine all subnet connection and link connection which construct the virtual connection c1'. Since the NE is capable of monitoring the fault of a single link connection, the control node will notify the transmission NE to set up a link connection if the link connection is determined during the setting up of the virtual connection, so as to further increase the efficiency for restoring the service faults. Moreover, the control node should record the route of the regular connection of the virtual connection using this link connection.
(6) When a subsequent timer for setting the virtual connection of the control node A' expires, the service 2 with a request of setting up the virtual connection is found, so that the route of the virtual connection should be determined first. The route for setting up the virtual connection is determined as: A→F→D, according to the current status of the network resource, with a consideration that the Shared Risk Link Group traversed by the virtual connection should not be the same of that of the regular connection, i.e. the virtual connection must not use the common link of the route: A→E→D.
(7) The control node A' initiates setting up the virtual connection c2 of the service 2 by using the signaling of RSVP, all the link connections and the subnet connections constructing the virtual connection c2' are determined through the interaction and information exchanging between the control nodes of the transmission NEs traversed by the virtual connection. During the process of setting up the virtual connection c2' the control node A' finds a link connection is used by the virtual connection c1' on the link between the NE A and NE E. The route of the regular service connection c1 for the virtual connection c1' and the route of regular service connection c2 of the virtual connection c2' are separated and independent, i.e. the routes of c1 and c2 do not belong to the same Shared Risk Link Group, so that the virtual connection c2' and c1' share this link connection in order to make a best use of link resource. During the process of setting up the virtual connection c2', since the NE is capable of monitoring fault of the single link connection, the control node will notify the transmission NE to set up the link connection if the link connection is determined during the setting up of the virtual connection, so as to further increase the efficiency of service restoration.
(8) When the link between the NE E and NE D faults, NE D detects a fault of the connection c2, then sends this fault information to the source control node A' via the signaling, and then the control node initiates restoring process. First a timer of waiting for the restoration is initiated. If the fault vibration caused by the device with a failure is not that frequent enough, as an original strategy is determined in advance, an alternate connection will be set up once a fault occurs. Therefore, according to the strategy, the control node A' initiates setting up an alternate connection. Firstly, the control node A' detects that the virtual connection for this service has been set up already, free from a fault and available, so the control node A' sends "USE" command to other control nodes, all the NEs are notified by the control nodes corresponding to the NEs traversed by the virtual connection to set up cross-connection, and finally, the virtual connection is altered into a real connection. During the processing of the virtual connection c2', the control node A' finds that the connection resource used by the virtual connection c' has been occupied/snatched, so that this virtual connection will be marked with "Occupied/Snatched".
(9) When the timer for waiting for the restoration expires, and the service faults still exists, the service is switched from the connection c2 to the alternate connection, so that the restoration process is completed.

Now with reference to Fig. 6, the processing steps for dynamically setting up service layer connection to satisfy the request of client layer connection will be explained in detail as follows. As shown in Fig. 6, a transmission network is constructed by multiple network elements. The transmission network is constituted of a service layer network supporting VC-4 in a horizontal orientation, and client layer signals VC-3, VC-12 and VC-11 can be accessed into the network in a vertical orientation. In this network, the client layer signal can only be accessed into the network through the VC-4 end-to-end connection, i.e. the number of the NEs crossed over a client layer end-to-end connection is no more than 2. Here, the reason that the network does not support the client layer signal end-to-end connection horizontally is to prevent the network from the bad influence on the stability caused by frequent dynamical operations of the client layer end-to-end connection. The process comprises steps as follows:
Step 1: First the control node A' of the transmission NE node A receives a bidirectional service connection request of a client layer VC-12 signal, and a source VC-12 channel of this connection request is located at A, and a destination VC-12 channel is located at C.
Step 2: The control node A' detects the transmission network of the NE A only supports VC-4 signal link connection in the horizontal orientation, so that the control node A' determines whether there is a service layer connection c existing between A and C, and whether the service connection c contains spare client layer connection VC-12. If it is determined as "No", then go on to a next step, else, go to step 4.
Step 3: The control node A' finds an available VC-4 connection route from A to C: A→E→C, then the control node A' initiates setting up a corresponding VC-4 connection, and a VC-4 connection c is established by using RSVP signaling by the control nodes corresponding to all the NEs traversed by this connection.
Step 4: The control node A' sends out a request for setting up VC-12 connection to the control nodes C' of the NE C, and then the control node A operates in corporation with the control node C' to select a VC-12 link connection contained in the service layer connection c, and notify the NE A and NE C to set up real VC-12 physical connection, and finally, the control node A' and C' will respectively bind the VC-12 signal to the client layer VC-12 connection, thus a VC-12 end-to-end connection is set up.

### THE INDUSTRY APPLICATION

In comparison with the conventional technology, the present invention provides a method for service connection establishment and service fault restoration and protection, with the dynamical changing of the request for the service layer connection being taken into account, and advantageously using the virtual connection technique, including the resource sharing of the virtual connections, which further optimizes the effect of dynamically take advantageous of the optical network resource, increases the reliability of service restoration in a way of transmitting in parallel and receiving in precedence. Specially, the present invention also provides a method which solves the conflict problem, when resource allocation conflict occurs during the connection establishment over the entire network.

## Claims

1. A method for service connection creating and service restoring in an optical network which comprises a transmission plane system (20) and a control plane system (10), wherein said transmission plane system (20) comprises multiple transmitting network elements (21), each transmission network element (21) uniquely corresponding to a control node (11) in said control plane system (10), **characterized in that** the method comprises steps of:
step 1: initiating a timer at the control node (11);
step 2: upon reception of a service request, determining link connections and subnet (23) connections by the control node (11), and notifying the transmission plane system (20) to set up or allocate a corresponding link connections and to set up subnet (23) connections, so as to establish a regular service connection (25) supporting the requested service;
step 3: after the expiration of the timer for setting up the virtual connection (27) of the control node (11), initiating a search for service requests for which virtual connections (27) need to be set up, and initiating a process of setting up the virtual connection (27) for the searched service request which is in line with criteria for setting up the virtual connection (27), and then re-initiating the timer; wherein the virtual connection (27) for the service is set up subject to following conditions:
- the regular service connection (25) has been set up;
- the virtual connection mode is requested to be used to provide a reliable fault restoration mechanism for the service according to the service class and the control system strategy.
step 4: setting up a virtual connection (27), comprising,
determining a virtual connection route in a source route mode; determining the selection of link connection resource and determining the subnet (23) connection relation by the control node (11) corresponding to each network element traversed by the virtual connection (27), and notifying the transmission plane system (20) to set up or allocate the link connections, after the virtual connection route has been determined;
step 5: initiating service restoration using virtual connection (27) if the service has a restoration request, when a service fault occurs due to a failure of the regular service connection (25);
step 6: implementing the operation of reverting to the regular service connection (25) for a service-revertible request in response to eliminating of the failure which occurred in the original regular service connection (25) after the service restoration accomplished;
wherein the timer in step 1 is initiated in succession of the initialization of the control plane system (10), or during the existence of the regular service connection (25) after its establishment; the timer is re-initiated when the timer expires;
Wherein the regular service connection (25) is established upon reception of a service request, it can be a working connection only, or a connection composed of both working connection and the protection connection; wherein the fault refers to the failure of service transmission that is caused by the fault of the transmission plane system (20) for supporting the service connection.

2. The method according to claim 1, wherein in step 2, when the control plane system (10) receives a service request from the client layer, if currently there is no sufficient client layer connection resources provided by the service layer for setting up a connection for the current service, then a service layer connection (30) request may be activated in a dynamic way, firstly a service layer connection (30) supporting the client layer service is set up, then a client layer connection (31) is set up, wherein a protection connection and a virtual connection of the service layer connection (30) may be established or released dynamically according to the request of the protection and restoration of the client layer service.

3. The method according to claim 2, wherein when a set of client layer services with the protection and restoration request are transmitted on a same service layer connection (30), the working connection and the protection connection for a service are allowed to partially share a common route, and the working connection and the protection connection are allowed to use common link connection resource on the common route, in case there is insufficient network resource.

4. The method according to claim 3, wherein information of all the link connection relations contained in the service layer connection (as a link) (30) is obtained by the control nodes (11) corresponding to the transmission network elements (21) located at two ends of the service layer connection (30) through exchanging information of the adapted client layer path the two ends of the service layer connection (30), in or in succession to the process of setting up of the service layer connection (30).

5. The method according to claim 1, wherein in step 4, the strategy for determining the route comprises: disjointing of routes including disjointing of nodes and links should be considered as much as possible for setting up virtual connection (27) and regular service connections (25), the virtual connection route should not be in a common Shared Risk Linkage Group of the original regular service connection route as much as possible; and sharing a part of common route is allowed between the virtual connection (27) and the regular service connection (25) of a same service in case the network resource is insufficient;
the strategy for selecting the link connection resource constructing the virtual connection comprises: the link connection resource traversed by the virtual connection can be shared by other virtual connections (27), and snatched by other regular service connections (25); and
the strategy for whether or not notifying the transmission plane system (20) to set up a link connection after the selection of the link connection resource constructing the virtual connection comprises: if the transmission network element is capable of monitoring the link connection traversed by the virtual connection independently, then the transmission network element is notified to set up a link connection, but not notified to set up a subnet (23) connection.

6. The method according to claim 5, wherein the strategies for selecting the link connection resource constructing the virtual connection comprises steps:
- notifying the control nodes (11) traversed by the virtual connection with the information of the Shared Risk Link Group of the regular service connection (25) by the source control node (11), at the beginning of setting up the virtual connection;
- recording in each control node (11) the information of the Shared Risk Link Group of the regular service connection (25) corresponding to the virtual connection for each link connection which is used by the virtual connection;
- sharing a common link connection resource by a virtual connection and a regular service connection (25) of a same service in case the network resource is insufficient, when the virtual connection and the regular service connection (25) share a part of common route;
- sharing a common link connection resource by two virtual connections (27) of two services, if the Shared Risk Link Groups of the regular service connections (25) of the two services are different;
- not sharing a common link connection resource as much as possible by two virtual connections (27) of two services, if the Shared Risk Link Groups of the regular service connections (25) of the two services are partially different;
- not sharing a common link connection resource by two virtual connection of the two services, if the Shared Risk Link Groups of the regular service connections (25) of the two services are identical.

7. The method according to claim 1 or 6, wherein the control node (11) broadcasts the link status information of each link during the setting up of the service connection, the link information being broadcasted along each layer of link, so as to update the network topology in time when link information changes.

8. The method according to claim 7, wherein the said link information includes: number of spare link connections, number of link connections which can be snatched, and number of spare link connections which can be used by virtual connections (27).

9. The method according to claim 8, wherein the link status information further includes number of link resources to be shared by the virtual connections (27), and number of link resources to be shared by the virtual connection should be subtracted by one when the number of the virtual connections (27) sharing the common link connection resource reaches a maximum value.

10. The method according to claim 1, wherein in step 5 the initiating of the service restoration further includes steps:
- initiating a restoration waiting timer;
- checking whether there is a virtual connection free from fault, if a fault still exists among all the regular service connections (25), when the restoration waiting timer expires;
- if a virtual connection free from fault exits, sending out a command of "USE" from the service source control node (11) to the control node (11) of a next transmission network elements traversed by the virtual connection, and sending out a command of "USE" to a control node (11) of a next transmission network element traversed by the virtual connection from each control node (11) which has received the "USE" command, and then performing the "USE" operation of the virtual connection by: notifying the transmission network elements to set up subnet (23) connections by the source control node (11) and all the control nodes (11) received the "USE" command; sending a further notification to the transmission network elements to set up the link connection if the transmission plane system (20) has no link connection established prior to the setting up of the virtual connection; altering the virtual connection into a real connection as an alternate connection if the virtual connection has corresponding subnet (23) connections and link connections in the transmission plane system (20);
- switching the service from the regular service connection (25) to the alternate connection to restore a service fault, if the virtual connection is successfully altered into the real connection, and the virtual connection is free from fault currently;
- setting up a new alternate connection by a dynamic rerouting to restore service fault, if there is no available virtual connection free from fault or the virtual connection fails to be set up; and
- switching the service from the regular service connection (25) to the alternate connection for transmission so as to restore the service fault, if the service fault has not been eliminated

11. The method according to claim 10, wherein if a service connection to be restored is a service layer connection, two opposite ends of which are traversed by signal of multiple client layer connection (31), then all client layer services are switched to the alternate service layer connection (30) after the setting up of the alternate service layer connection; when the control node (11) is aware that the current service connection is a service layer connection, and is controlling the use of the service layer connection (30) by the client layer connection (31), then the restoration will not be initiated, if the service layer connection (30) occurs a fault and but dose not carry a client layer connection (31) signal.

12. The method according to claim 10, wherein if a service restored has no service-revertible request, the attribute of the alternate connection will be changed to the regular service connection (25), and the original regular service connection (25) will be deleted, or the original regular service connection (25) and the alternate connection together construct a regular service connection (25) being composed of a working connection and a protection connection, or the original regular service connection (25) will be changed to the virtual connection of the service; if the service restored has a service-revertible request, then the service will be reverted to the regular service connection (25) when the original regular service connection (25) fault is eliminated, the reverting process comprises steps of:
- initiating a reverting waiting timer;
- setting up a original regular service connection (25) according to the information of the original regular service connection (25) stored in the control node (11), if the original regular service connection (25) has been deleted during the restoration;
- changing the virtual connection to the real connection first so as to rebuild the original regular service connection (25), if the original regular service connection (25) has been altered into the virtual connection instead of having been deleted during the restoration;
- reverting the service to the original regular service connection (25) for transmission, if the original regular service connection (25) has been set up, when the reverting waiting timer expires.

13. The method according to claim 12, wherein an operation of transmission in parallel and receiving in precedence is performed at source and destination ends of the service before leaving the alternate connection, in order to avoid new faults due to a large time difference of performing reverting operation between the source and the destination network elements.

14. The method according to claim 10, wherein if a service fault occurs again after the restoration and an alternate connection exists, the alternate connection will be deleted and a restoration will be reinitiated.

15. The method according to claim 1, wherein in steps 2, 3 and 4, the setting up of the service connection including the setting up of the virtual connection further comprises allocation process of the link connection resource, the allocation process is performed based on a unified competition rule for the entire network in order to solve the allocation conflict of link resource, wherein the criteria of this competition rule includes:(1) competing based on the service connection priority; (2) using the source transmission NE ID of the connection as the connection priority; (3) assigning different connection ID for different connections by the control nodes (11) in case the source of the connection is a same transmission NE, and determining the priority by the assigned connection ID.

16. The method according to claims 1, wherein said control node (11) includes topology information of each layer of the optical network, which includes link information, channel resource status information of each optical transmission network element controlled by corresponding control node (11), wherein the type of the signal of the link connection contained in all links in the topology information of each layer is identical.

17. The method according to claim 1, wherein the said transmission network element is replaced by a subnet (23) constructed by multiple network elements.

## Patentansprüche

1. Verfahren für Dienstverbindungsaufbau und Dienstwiederherstellung in einem optischen Netzwerk, das ein Sendeebenensystem (20) und ein Steuerungsebenensystem (10) umfasst, wobei das Sendeebenensystem (20) mehrere Sendenetzwerkelemente (21) umfasst, wobei jedes Sendenetzwerkelement (21) eindeutig einem Steuerungsknoten (11) in dem Steuerungsebenensystem (10) entspricht, **dadurch gekennzeichnet, dass** das Verfahren folgende Schritte umfasst:
Schritt 1: Initiieren eines Timers im Steuerungsknoten (11);
Schritt 2: bei Empfang einer Dienstanforderung, Bestimmen von Linkverbindungen und Subnetz (23)-Verbindungen durch den Steuerungsknoten (11) und Benachrichtigen des Sendeebenensystems (20), entsprechende Linkverbindungen einzurichten oder zuzuweisen und Subnetz (23)-Verbindungen einzurichten, um eine reguläre Dienstverbindung (25) herzustellen, die den angeforderten Dienst unterstützt;
Schritt 3: nach Ablauf des Timers zum Einrichten der virtuellen Verbindung (27) des Steuerungsknotens (11), Initiieren einer Suche nach Dienstanforderungen, für die virtuelle Verbindungen (27) eingerichtet werden müssen, und Initiieren eines Prozesses des Einrichtens der virtuellen Verbindung (27) für die gesuchte Dienstanforderung, die Kriterien für das Einrichten der virtuellen Verbindung (27) erfüllt, und dann erneutes Initiieren des Timers; wobei die virtuelle Verbindung (27) für den Dienst vorbehaltlich der folgenden Bedingungen eingerichtet wird:
- die reguläre Dienstverbindung (25) wurde eingerichtet;
- die Verwendung des virtuellen Verbindungsmodus wird angefordert, um einen zuverlässigen Störungsbehebungs- und Wiederherstellungsmechanismus für den Dienst gemäß der Dienstkategorie und der Steuerungssystemstrategie bereitzustellen.
Schritt 4: Einrichten einer virtuellen Verbindung (27), was Folgendes umfasst:
Bestimmen einer virtuellen Verbindungsroute in einem Quellenroutungsmodus; Bestimmen der Auswahl der Linkverbindungsressource und Bestimmen der Subnetz (23)-Verbindungsbeziehung durch den Steuerungsknoten (11) entsprechend jedem Netzwerkelement, das von der virtuellen Verbindung (27) durchquert wird, und Benachrichtigen des Sendeebenensystems (20), die Linkverbindungen einzurichten oder zuzuweisen, nachdem die virtuelle Verbindungsroute bestimmt wurde;
Schritt 5: Initiieren der Dienstwiederherstellung unter Verwendung der virtuellen Verbindung (27), wenn der Dienst eine Wiederherstellungsanforderung hat, wenn eine Dienststörung aufgrund eines Ausfalls der regulären Dienstverbindung (25) eintritt;
Schritt 6: Implementieren der Operation des Zurückkehrens zu der regulären Dienstverbindung (25) für eine Dienst-umkehrbare Anforderung in Reaktion auf die Beseitigung der Störung, die in der ursprünglichen regulären Dienstverbindung (25) eintrat, nachdem die Dienstwiederherstellung ausgeführt wurde;
wobei der Timer in Schritt 1 im Anschluss an die Initialisierung des Steuerungsebenensystems (10) oder während des Bestehens der regulären Dienstverbindung (25) nach ihrer Herstellung initiiert wird; wobei der Timer erneut initiiert wird, wenn der Timer abläuft;
wobei die reguläre Dienstverbindung (25) bei Empfang einer Dienstanforderung aufgebaut wird, die lediglich eine Arbeitsverbindung zu sein braucht oder eine Verbindung sein kann, die aus einer Arbeitsverbindung und der Schutzverbindung zusammengesetzt ist; wobei mit Störung der Ausfall der Dienstübertragung gemeint ist, der durch die Störung des Sendeebenensystems (20) zum Unterstützen der Dienstverbindung verursacht wird.

2. Verfahren nach Anspruch 1, wobei in Schritt 2, wenn das Steuerungsebenensystem (10) eine Dienstanforderung von der Client-Schicht empfängt, wenn momentan nicht genügend Client-Schicht-Verbindungsressourcen durch die Dienstschicht zum Einrichten einer Verbindung für den momentanen Dienst bereitgestellt werden, dann eine Dienstschichtverbindungs (30)-Anforderung auf eine dynamische Weise aktiviert werden kann; zuerst wird eine Dienstschichtverbindung (30), die den Client-Schicht-Dienst unterstützt, eingerichtet, dann wird eine Client-Schichtverbindung (31) eingerichtet, wobei eine Schutzverbindung und eine virtuelle Verbindung der Dienstschichtverbindung (30) gemäß der Anforderung des Schutzes und der Wiederherstellung des Client-Schicht-Dienstes dynamisch aufgebaut oder freigegeben werden können.

3. Verfahren nach Anspruch 2, wobei, wenn ein Satz Client-Schicht-Dienste mit der Schutz- und Wiederherstellungsanforderung auf derselben Dienstschichtverbindung (30) gesendet werden, die Arbeitsverbindung und die Schutzverbindung für einen Dienst teilweise eine gemeinsame Route nutzen dürfen, und die Arbeitsverbindung und die Schutzverbindung eine gemeinsame Linkverbindungsressource auf der gemeinsamen Route nutzen dürfen, falls nicht genügend Netzwerkressourcen zur Verfügung stehen.

4. Verfahren nach Anspruch 3, wobei Informationen aller Linkverbindungsbeziehungen, die in der Dienstschichtverbindung (als ein Link) (30) enthalten sind, durch die Steuerungsknoten (11), die den Sendenetzwerkelementen (21) entsprechen, die sich an zwei Enden der Dienstschichtverbindung (30) befinden, durch den Austausch von Informationen des angepassten Client-Schichtpfades an den zwei Enden der Dienstschichtverbindung (30) während des Prozesses oder nach dem Prozess des Einrichtens der Dienstschichtverbindung (30) erhalten werden.

5. Verfahren nach Anspruch 1, wobei in Schritt 4 die Strategie zum Bestimmen der Route Folgendes umfasst: das Trennen von Routen, einschließlich des Trennens von Knoten und Links, sollte so weit wie möglich für das Einrichten einer virtuellen Verbindung (27) und regulärer Dienstverbindungen (25) in Betracht gezogen werden, und die virtuelle Verbindungsroute sollte so weit wie möglich nicht in einer gemeinsamen Shared Risk Linkage Group der ursprünglichen regulären Dienstverbindungsroute sein; und die gemeinsame Nutzung eines Teils der gemeinsamen Route ist zwischen der virtuellen Verbindung (27) und der regulären Dienstverbindung (25) desselben Dienstes zulässig, falls die Netzwerkressourcen nicht ausreichen;
die Strategie zum Auswählen der Linkverbindungsressource, aus der die virtuelle Verbindung besteht, Folgendes umfasst: die Linkverbindungsressource, die von der virtuellen Verbindung durchquert wird, kann von anderen virtuellen Verbindungen (27) mit genutzt werden und durch andere reguläre Dienstverbindungen (25) ergriffen werden; und
die Strategie dafür, ob das Sendeebenensystem (20) benachrichtigt werden soll oder nicht, eine Linkverbindung einzurichten, nachdem die Linkverbindungsressource, die die virtuelle Verbindung bildet, ausgewählt wurde, Folgendes umfasst: wenn das Sendenetzwerkelement in der Lage ist, die Linkverbindung zu überwachen, die von der virtuellen Verbindung unabhängig durchquert wird, dann wird das Sendenetzwerkelement benachrichtigt, eine Linkverbindung einzurichten, aber nicht benachrichtigt, eine Subnetz (23)-Verbindung einzurichten.

6. Verfahren nach Anspruch 5, wobei die Strategien zum Auswählen der Linkverbindungsressource, die die virtuelle Verbindung bildet, folgende Schritte umfasst:
- Benachrichtigen der Steuerungsknoten (11), die von der virtuellen Verbindung durchquert werden, über die Informationen der Shared Risk Link Group der regulären Dienstverbindung (25) durch den Quellensteuerungsknoten (11) am Beginn des Einrichtens der virtuellen Verbindung;
- Aufzeichnen, in jedem Steuerungsknoten (11), der Informationen der Shared Risk Link Group der regulären Dienstverbindung (25) entsprechend der virtuellen Verbindung für jede Linkverbindung, die durch die virtuelle Verbindung verwendet wird;
- gemeinsame Nutzung einer gemeinsamen Linkverbindungsressource durch eine virtuelle Verbindung und eine reguläre Dienstverbindung (25) desselben Dienstes, falls die Netzwerkressourcen nicht ausreichen, wenn die virtuelle Verbindung und die reguläre Dienstverbindung (25) einen Teil der gemeinsamen Route gemeinsam nutzen;
- gemeinsame Nutzung einer gemeinsamen Linkverbindungsressource durch zwei virtuelle Verbindungen (27) von zwei Diensten, wenn die Shared Risk Link Groups der regulären Dienstverbindungen (25) der zwei Dienste verschieden sind;
- so weit wie möglich keine gemeinsame Nutzung einer gemeinsamen Linkverbindungsressource durch zwei virtuelle Verbindungen (27) von zwei Diensten, wenn die Shared Risk Link Groups der regulären Dienstverbindungen (25) der zwei Dienste teilweise verschieden sind;
- keine gemeinsame Nutzung einer gemeinsamen Linkverbindungsressource durch zwei virtuelle Verbindungen der zwei Dienste, wenn die Shared Risk Link Groups der regulären Dienstverbindungen (25) der zwei Dienste identisch sind.

7. Verfahren nach Anspruch 1 oder 6, wobei der Steuerungsknoten (11) die Linkstatusinformationen jedes Links während des Einrichtens der Dienstverbindung rundsendet, wobei die Linkinformationen entlang jeder Schicht eines Links rundgesendet werden, um die Netzwerktopologie rechtzeitig zu aktualisieren, wenn sich Linkinformationen ändern.

8. Verfahren nach Anspruch 7, wobei die Linkinformationen Folgendes enthalten: die Anzahl der Reserve-Linkverbindungen, die Anzahl der Linkverbindungen, die ergriffen werden können, und die Anzahl der Reserve-Linkverbindungen, die durch virtuelle Verbindungen (27) verwendet werden können.

9. Verfahren nach Anspruch 8, wobei die Linkstatusinformationen des Weiteren die Anzahl der Linkressourcen enthalten, die durch die virtuellen Verbindungen (27) gemeinsam genutzt werden sollen, und die Anzahl der Linkressourcen, die durch die virtuelle Verbindung gemeinsam genutzt werden sollen, ist um eins zu subtrahieren, wenn die Anzahl der virtuellen Verbindungen (27), die die gemeinsame Linkverbindungsressource gemeinsam nutzen, einen Maximalwert erreicht.

10. Verfahren nach Anspruch 1, wobei in Schritt 5 das Initiieren der Dienstwiederherstellung des Weiteren folgende Schritte enthält:
- Initiieren eines Wiederherstellungswarte-Timers;
- Überprüfen, ob es eine störungsfreie virtuelle Verbindung gibt, wenn es noch eine Störung unter allen regulären Dienstverbindungen (25) gibt, wenn der Wiederherstellungswarte-Timer abläuft;
- wenn es eine störungsfreie virtuelle Verbindung gibt, Versenden eines Befehls "USE" von dem Dienstquellensteuerungsknoten (11) an den Steuerungsknoten (11) eines nächsten Sendenetzwerkelements, das von der virtuellen Verbindung durchquert wird, und Versenden eines Befehls "USE" an einen Steuerungsknoten (11) eines nächsten Sendenetzwerkelements, das von der virtuellen Verbindung durchquert wird, von jedem Steuerungsknoten (11), der den "USE"-Befehl empfangen hat, und dann Ausführen der "USE"-Operation der virtuellen Verbindung durch: Benachrichtigen der Sendenetzwerkelemente, Subnetz (23)-Verbindungen durch den Quellensteuerungsknoten (11) einzurichten, und alle Steuerungsknoten (11) haben den "USE"-Befehl empfangen; Senden einer weiteren Benachrichtigung an die Sendenetzwerkelemente, die Linkverbindung einzurichten, wenn das Sendeebenensystem (20) keine Linkverbindung hat, die vor dem Einrichten der virtuellen Verbindung aufgebaut wurde; Ändern der virtuellen Verbindung zu einer realen Verbindung als eine alternative Verbindung, wenn die virtuelle Verbindung entsprechende Subnetz (23)-Verbindungen und Linkverbindungen in dem Sendeebenensystem (20) hat;
- Umschalten des Dienstes von der regulären Dienstverbindung (25) zu der alternativen Verbindung, um eine Dienststörung zu beseitigen, wenn die virtuelle Verbindung erfolgreich zu der realen Verbindung geändert wurde und die virtuelle Verbindung momentan störungsfrei ist;
- Einrichten einer neuen alternativen Verbindung durch eine dynamische Neuroutung zum Beseitigen der Dienststörung, wenn es keine verfügbare störungsfreie virtuelle Verbindung gibt oder die virtuelle Verbindung nicht eingerichtet werden kann; und
- Umschalten des Dienstes von der regulären Dienstverbindung (25) zu der alternativen Verbindung zum Senden, um die Dienststörung zu beheben, wenn die Dienststörung nicht beseitigt worden ist.

11. Verfahren nach Anspruch 10, wobei, wenn eine wiederherzustellende Dienstverbindung eine Dienstschichtverbindung ist, ihre zwei entgegengesetzten Enden von einem Signal mehrerer Client-Schichtverbindungen (31) durchquert werden, und dann alle Client-Schicht-Dienste zu der alternativen Dienstschichtverbindung (30) umgeschaltet werden, nachdem die alternative Dienstschichtverbindung eingerichtet wurde; wenn der Steuerungsknoten (11) weiß, dass die momentane Dienstverbindung eine Dienstschichtverbindung ist und die Verwendung der Dienstschichtverbindung (30) durch die Client-Schichtverbindung (31) steuert, so wird die Wiederherstellung nicht initiiert, wenn in der Dienstschichtverbindung (30) eine Störung eintritt, aber kein Client-Schichtverbindungs (31)-Signal transportiert.

12. Verfahren nach Anspruch 10, wobei, wenn ein wiederhergestellter Dienst keine Dienst-umkehrbare Anforderung hat, das Attribut der alternativen Verbindung zu der regulären Dienstverbindung (25) geändert wird, und die ursprüngliche reguläre Dienstverbindung (25) wird gelöscht, oder die ursprüngliche reguläre Dienstverbindung (25) und die alternative Verbindung bilden zusammen eine reguläre Dienstverbindung (25), die aus einer Arbeitsverbindung und einer Schutzverbindung zusammengesetzt ist, oder die ursprüngliche reguläre Dienstverbindung (25) wird zu der virtuellen Verbindung des Dienstes geändert; wenn der wiederhergestellte Dienst eine Dienst-umkehrbare Anforderung hat, so wird der Dienst zu der regulären Dienstverbindung (25) zurück gewechselt, wenn die Störung der ursprünglichen regulären Dienstverbindung (25) beseitigt wurde, wobei der Rückwechselprozess folgende Schritte umfasst:
- Initiieren eines Rückwechselwarte-Timers;
- Einrichten einer ursprünglichen regulären Dienstverbindung (25) gemäß den Informationen der ursprünglichen regulären Dienstverbindung (25), die in dem Steuerungsknoten (11) gespeichert sind, wenn die ursprüngliche reguläre Dienstverbindung (25) während der Wiederherstellung gelöscht wurde;
- zuerst Wechseln der virtuellen Verbindung zu der realen Verbindung, um die ursprüngliche reguläre Dienstverbindung (25) wiederaufzubauen, wenn die ursprüngliche reguläre Dienstverbindung (25) zu der virtuellen Verbindung geändert wurde, anstatt während der Wiederherstellung gelöscht worden zu sein;
- Zurückwechseln des Dienstes zu der ursprünglichen regulären Dienstverbindung (25) zum Senden, wenn die ursprüngliche reguläre Dienstverbindung (25) eingerichtet wurde, wenn der Rückwechselwarte-Timer abläuft.

13. Verfahren nach Anspruch 12, wobei eine Operation des parallelen Sendens und des vorausgehenden Empfangens an Quellen- und Ziel-Enden des Dienstes ausgeführt wird, bevor die alternative Verbindung verlassen wird, um neue Störungen aufgrund einer großen Zeitdifferenz beim Ausführen der Rückwechseloperation zwischen den Quellen- und den Ziel-Netzwerkelementen zu vermeiden.

14. Verfahren nach Anspruch 10, wobei, wenn eine Dienststörung nach der Wiederherstellung erneut eintritt und eine alternative Verbindung existiert, die alternative Verbindung gelöscht wird und eine Wiederherstellung erneut initiiert wird.

15. Verfahren nach Anspruch 1, wobei in den Schritten 2, 3 und 4 das Einrichten der Dienstverbindung, einschließlich des Einrichtens der virtuellen Verbindung, des Weiteren einen Zuteilungsprozess der Linkverbindungsressource umfasst, wobei der Zuteilungsprozess auf der Basis einer einheitlichen Konkurrenzregel für das gesamte Netzwerk ausgeführt wird, um den Zuweisungskonflikt von Linkressourcen zu lösen, wobei zu den Kriterien dieser Konkurrenzregel Folgendes gehört: (1) Konkurrieren auf der Basis der Dienstverbindungspriorität; (2) Verwenden der Quellensende-NE-ID der Verbindung als die Verbindungspriorität; (3) Zuweisen verschiedener Verbindungs-IDs für verschiedene Verbindungen durch die Steuerungsknoten (11), falls die Quelle der Verbindung dieselbe Sende-NE ist, und Bestimmen der Priorität durch die zugewiesene Verbindungs-ID.

16. Verfahren nach Anspruch 1, wobei der Steuerungsknoten (11) Topologie-Informationen von jeder Schicht des optischen Netzwerks enthält, die Linkinformationen und Kanalressourcenstatusinformationen von jedem optischen Sendenetzwerkelement enthalten, das durch den entsprechenden Steuerungsknoten (11) gesteuert wird, wobei der Typ des Signals der Linkverbindung, das in allen Links in den Topologie-Informationen jeder Schicht enthalten ist, identisch ist.

17. Verfahren nach Anspruch 1, wobei das Sendenetzwerkelement durch ein Subnetz (23) ersetzt wird, das aus mehreren Netzwerkelementen besteht.

## Revendications

1. Procédé de création de connexion de service et de rétablissement de service dans un réseau optique qui comprend un système de plan de transmission (20) et un système de plan de commande (10), dans lequel ledit système de plan de transmission (20) comprend de multiples éléments de réseau de transmission (21), chaque élément de réseau de transmission (21) correspondant de manière unique à un noeud de commande (11) dans ledit système de plan de commande (10), **caractérisé en ce que** le procédé comprend les étapes consistant à :
étape 1 : initier une minuterie au niveau du noeud de commande (11) ;
étape 2 : à la réception d'une demande de service, déterminer des connexions de liaison et des connexions de sous-réseau (23) par le noeud de commande (11), et notifier au système de plan de transmission (20) d'établir ou d'allouer des connexions de liaison correspondantes et d'établir des connexions de sous-réseau (23), de manière à établir une connexion de service régulière (25) supportant le service demandé;
étape 3 : après l'expiration de la minuterie pour établir la connexion virtuelle (27) du noeud de commande (11), initier une recherche pour des demandes de service pour lesquelles des connexions virtuelles (27) doivent être établies, et initier un processus d'établissement de la connexion virtuelle (27) pour la demande de service recherchée qui est conforme à des critères pour établir la connexion virtuelle (27), puis réinitier la minuterie; dans lequel la connexion virtuelle (27) pour le service est établie sous réserve des conditions suivantes :
- la connexion de service régulière (25) a été établie;
- le mode de connexion virtuelle est demandé à être utilisé pour fournir un mécanisme de rétablissement en cas de panne fiable pour le service en fonction de la classe de service et de la stratégie du système de commande;
étape 4 : établir une connexion virtuelle (27), comprenant de :
déterminer une route de connexion virtuelle dans un mode de route source; déterminer la sélection d'une ressource de connexion de liaison et déterminer la relation de connexion de sous-réseau (23) par le noeud de commande (11) correspondant à chaque élément de réseau traversé par la connexion virtuelle (27), et notifier au système de plan de transmission (20) d'établir ou d'allouer les connexions de liaison après que la route de connexion virtuelle a été déterminée;
étape 5 : initier un rétablissement de service en utilisant une connexion virtuelle (27) si le service a une demande de rétablissement, lorsqu'un défaut de service se produit en raison d'une défaillance de la connexion de service régulière (25);
étape 6 : mettre en oeuvre l'opération de réversion à la connexion de service régulière (25) pour une demande de service réversible en réponse à l'élimination de la défaillance qui s'est produite dans la connexion de service régulière d'origine (25) après que le rétablissement de service a été accompli;
dans lequel la minuterie dans l'étape 1 est initiée à la suite de l'initialisation du système de plan de commande (10), ou pendant l'existence de la connexion de service régulière (25) après son établissement; la minuterie est réinitiée lorsque la temporisation expire;
dans lequel la connexion de service régulière (25) est établie à la réception d'une demande de service, il peut s'agir d'une connexion de travail uniquement, ou d'une connexion composée à la fois d'une connexion de travail et d'une connexion de protection; dans lequel le défaut désigne l'échec de transmission de service qui est causé par le défaut du système de plan de transmission (20) pour supporter la connexion de service.

2. Procédé selon la revendication 1, dans lequel, dans l'étape 2, lorsque le système de plan de commande (10) reçoit une demande de service à partir de la couche client, s'il n'y a actuellement pas de ressources de connexion de couche client suffisantes fournies par la couche de service pour établir une connexion pour le service actuel, alors une demande de connexion de couche de service (30) peut être activée d'une manière dynamique, tout d'abord une connexion de couche de service (30) supportant le service de couche client est établie, puis une connexion de couche client (31) est établie, dans lequel une connexion de protection et une connexion virtuelle de la connexion de couche de service (30) peuvent être établies ou libérées dynamiquement en fonction de la demande de la protection et du rétablissement du service de couche client.

3. Procédé selon la revendication 2, dans lequel, lorsqu'un ensemble de services de couche client avec la demande de protection et de rétablissement sont transmis sur une même connexion de couche de service (30), la connexion de travail et la connexion de protection pour un service sont autorisées à partager partiellement une route commune, et la connexion de travail et la connexion de protection sont autorisées à utiliser une ressource de connexion de liaison commune sur la route commune, dans le cas où les ressources de réseau sont insuffisantes.

4. Procédé selon la revendication 3, dans lequel des informations de toutes les relations de connexion de liaison contenues dans la connexion de couche de service (comme une liaison) (30) sont obtenues par les noeuds de commande (11) correspondant aux éléments du réseau de transmission (21) situés au niveau de deux extrémités de la connexion de couche de service (30) en échangeant des informations sur le chemin de couche client adapté aux deux extrémités de la connexion de couche de service (30), dans le processus d'établissement ou à la suite du processus d'établissement de la connexion de couche de service (30).

5. Procédé selon la revendication 1, dans lequel, dans l'étape 4, la stratégie pour déterminer la route comprend : la disjonction des routes, y compris la disjonction des noeuds et des liaisons, doit être considérée autant que possible pour l'établissement de la connexion virtuelle (27) et de la connexion de service régulière (25), la route de connexion virtuelle ne doit pas être, autant que possible, dans un groupe de liaisons à risque partagé commun de la route de connexion de service régulière d'origine; et le partage d'une partie d'une route commune est autorisé entre la connexion virtuelle (27) et la connexion de service régulière (25) d'un même service dans le cas où la ressource de réseau est insuffisante;
la stratégie pour sélectionner la ressource de connexion de liaison construisant la connexion virtuelle comprend : la ressource de connexion de liaison traversée par la connexion virtuelle peut être partagée par d'autres connexions virtuelles (27), et appréhendée par d'autres connexions de connexions de service régulières (25); et
la stratégie pour savoir si oui ou non il faut notifier au système de plan de transmission (20) d'établir une connexion de liaison après la sélection de la ressource de connexion de liaison construisant la connexion virtuelle comprend : si l'élément de réseau de transmission est capable de surveiller la connexion de liaison traversée par la connexion virtuelle indépendamment, alors l'élément de réseau de transmission est notifié d'établir une connexion de liaison, mais n'est pas notifié d'établir une connexion de sous-réseau (23).

6. Procédé selon la revendication 5, dans lequel les stratégies pour sélectionner la ressource de connexion de liaison construisant la connexion virtuelle comprennent les étapes suivantes :
- aviser les noeuds de commande (11) traversés par la connexion virtuelle avec les informations du groupe de liaisons à risque partagé de la connexion de service régulière (25) par le noeud de commande de source (11), au début de l'établissement de la connexion virtuelle;
- enregistrer, dans chaque noeud de commande (11), les informations du groupe de liaisons à risque partagé de la connexion de service régulière (25) correspondant à la connexion virtuelle pour chaque connexion de liaison qui est utilisée par la connexion virtuelle;
- partager une ressource de connexion de liaison commune par une connexion virtuelle et une connexion de service régulière (25) d'un même service dans le cas où la ressource de réseau est insuffisante, lorsque la connexion virtuelle et la connexion de service régulière (25) partagent une partie de route commune;
- partager une ressource de connexion de liaison commune par deux connexions virtuelles (27) de deux services, si les groupes de liaisons à risque partagé des connexions de services régulières (25) des deux services sont différents;
- ne pas partager une ressource de connexion de liaison commune, autant que possible, par deux connexions virtuelles (27) de deux services, si les groupes de liaison à risque partagé des connexions de services régulières (25) des deux services sont partiellement différents;
- ne pas partager une ressource de connexion de liaison commune par deux connexions virtuelles des deux services, si les groupes de liaison à risque partagé des connexions de services régulières (25) des deux services sont identiques.

7. Procédé selon la revendication 1 ou 6, dans lequel le noeud de commande (11) diffuse les informations d'état de liaison de chaque liaison pendant l'établissement de la connexion de service, les informations de liaison étant diffusées le long de chaque couche de liaison, de manière à mettre à jour la topologie de réseau en temps opportun lorsque des informations de liaison changent.

8. Procédé selon la revendication 7, dans lequel lesdites informations de liaison comprennent : le nombre de connexions de liaison de réserve, le nombre de connexions de liaison qui peuvent être appréhendées, et le nombre de connexions de liaison de réserve qui peuvent être utilisées par des connexions virtuelles (27).

9. Procédé selon la revendication 8, dans lequel les informations d'état de liaison comprennent en outre un nombre de ressources de liaison devant être partagées par les connexions virtuelles (27), et l'on retire 1 au nombre de ressources de liaison devant être partagées par la connexion virtuelle lorsque le nombre des connexions virtuelles (27) partageant la ressource de connexion de liaison commune atteint une valeur maximale.

10. Procédé selon la revendication 1, dans lequel, à l'étape 5, l'initiation du rétablissement de service comprend en outre des étapes consistant à :
- initier une minuterie d'attente de rétablissement;
- vérifier s'il existe une connexion virtuelle exempte de défaut, si un défaut subsiste encore parmi toutes les connexions de service régulières (25), lorsque la minuterie d'attente de rétablissement expire;
- si une connexion virtuelle exempte de défaut existe, envoyer une commande « UTILISATION » à partir du noeud de commande source de service (11) au noeud de commande (11) d'un élément de réseau de transmission suivant traversé par la connexion virtuelle, et envoyer une commande « UTILISATION » à un noeud de commande (11) d'un élément de réseau de transmission suivant traversé par la connexion virtuelle à partir de chaque noeud de commande (11) qui a reçu la commande « UTILISATION », puis effectuer l'opération « UTILISATION » de la connexion virtuelle en : notifiant aux éléments de réseau de transmission d'établir des connexions de sous-réseau (23) par le noeud de commande source (11) et tous les noeuds de commande (11) qui ont reçu la commande « UTILISATION »; envoyer une notification supplémentaire aux éléments de réseau de transmission pour établir la connexion de liaison si le système de plan de transmission (20) n'a pas de connexion de liaison établie avant l'établissement de la connexion virtuelle; modifier la connexion virtuelle en faveur d'une connexion réelle en tant que connexion alternative si la connexion virtuelle a des connexions de sous-réseau (23) correspondantes et des connexions de liaison dans le système de plan de transmission (20) ;
- commuter le service de la connexion de service régulière (25) à la connexion alternative pour rétablir un défaut de service, si la connexion virtuelle est modifiée avec succès en faveur de la connexion réelle, et la connexion virtuelle est actuellement exempte de défaut;
- établir une nouvelle connexion alternative par un reroutage dynamique pour rétablir le défaut de service, s'il n'y a pas de connexion virtuelle disponible exempte de défaut ou la connexion virtuelle ne peut pas être établie; et
- commuter le service de la connexion de service régulière (25) à la connexion alternative pour la transmission de manière à rétablir le défaut de service, si le défaut de service n'a pas été éliminé.

11. Procédé selon la revendication 10, dans lequel si une connexion de service à rétablir est une connexion de couche de service dont les deux extrémités opposées sont traversées par un signal de multiples connexions de couche client (31), tous les services de couche client sont commutés sur la connexion de couche de service alternative (30) après l'établissement de la connexion de couche de service alternative; lorsque le noeud de commande (11) est au courant que la connexion de service actuelle est une connexion de couche de service, et commande l'utilisation de la connexion de couche de service (30) par la connexion de couche client (31), alors le rétablissement ne sera pas initié, si la connexion de couche de service (30) produit un défaut, mais ne contient pas un signal de connexion de couche client (31).

12. Procédé selon la revendication 10, dans lequel, si un service rétabli n'a pas de demande de service réversible, l'attribut de la connexion alternative sera changé en faveur de la connexion de service régulière (25), et la connexion de service régulière d'origine (25) sera supprimée, ou la connexion de service régulière d'origine (25) et la connexion alternative construisent ensemble une connexion de service régulière (25) qui est composée d'une connexion de travail et d'une connexion de protection, ou la connexion service régulière d'origine (25) sera modifiée en faveur de la connexion virtuelle du service; si le service rétabli a une demande de service réversible, le service effectuera une réversion vers la connexion de service régulière (25) lorsque le défaut de la connexion de service régulière d'origine (25) sera éliminé, le processus de réversion comprend les étapes consistant à :
- initier une minuterie d'attente de réversion;
- établir une connexion de service régulière d'origine (25) en fonction des informations de la connexion de service régulière d'origine (25) stockées dans le noeud de commande (11), si la connexion de service régulière d'origine (25) a été supprimée lors du rétablissement;
- modifier la connexion virtuelle en faveur de la première connexion réelle de manière à reconstruire la connexion de service régulière d'origine (25), si la connexion de service régulière d'origine (25) a été modifiée en faveur de la connexion virtuelle au lieu d'avoir été supprimée lors du rétablissement;
- ramener le service à la connexion de service régulière d'origine (25) pour la transmission, si la connexion de service régulière d'origine (25) a été établie, lorsque la minuterie d'attente de réversion expire.

13. Procédé selon la revendication 12, dans lequel une opération de transmission en parallèle et de réception en priorité est effectuée au niveau des extrémités de source et de destination du service avant de quitter la connexion alternative, afin d'éviter de nouveaux défauts dus à une différence temporelle importante dans l'exécution de l'opération de réversion entre les éléments de réseau de source et de destination.

14. Procédé selon la revendication 10, dans lequel, si un défaut de service se produit à nouveau après le rétablissement et qu'une connexion alternative existe, la connexion alternative sera supprimée et un rétablissement sera initié.

15. Procédé selon la revendication 1, dans lequel, dans les étapes 2, 3 et 4, l'établissement de la connexion de service comprenant l'établissement de la connexion virtuelle comprend en outre un processus d'allocation de la ressource de connexion de liaison, le processus d'allocation est effectué sur la base d'une règle de concurrence unifiée pour l'ensemble du réseau en vue de résoudre le conflit d'allocation de ressource de liaison, dans lequel les critères de cette règle de concurrence comprennent de : (1) concourir sur la base de la priorité de connexion de service; (2) utiliser l'ID de NE de transmission source de la connexion en tant que la priorité de connexion; (3) attribuer différents ID de connexion pour différentes connexions par les noeuds de commande (11) dans le cas où la source de connexion est un même NE de transmission, et déterminer la priorité de l'ID de connexion attribué.

16. Procédé selon la revendication 1, dans lequel ledit noeud de commande (11) comprend des informations de topologie de chaque couche du réseau optique, qui comprennent des informations de liaison, des informations d'état de ressource de canal de chaque élément de réseau de transmission optique commandé par le noeud de commande (11) correspondant, dans lequel le type de signal de la connexion de liaison contenue dans toutes les liaisons dans les informations de topologie de chaque couche est identique.

17. Procédé selon la revendication 1, dans lequel ledit élément de réseau de transmission est remplacé par un sous-réseau (23) construit par de multiples éléments de réseau.
